(19) **Europäisches Patentamt** / **European Patent Office** / **Office européen des brevets**

(11) **EP 3 769 330 B1**

(12) **FASCICULE DE BREVET EUROPEEN**

(45) Date de publication et mention de la délivrance du brevet:
**17.07.2024 Bulletin 2024/29**

(21) Numéro de dépôt: **19710433.4**

(22) Date de dépôt: **19.03.2019**

(51) Classification Internationale des Brevets (IPC):
**H01H 33/38** (2006.01)   **H01H 3/26** (2006.01)
**H01H 33/666** (2006.01)   **H01F 7/16** (2006.01)

(52) Classification Coopérative des Brevets (CPC):
**H01H 33/38; H01F 7/1607; H01H 3/26; H02P 3/18;**
**H02P 25/062;** H01H 33/6662; H01H 2003/268;
H02P 21/00

(86) Numéro de dépôt international:
**PCT/EP2019/056781**

(87) Numéro de publication internationale:
**WO 2019/179983 (26.09.2019 Gazette 2019/39)**

(54) **ACTIONNEUR ELECTROMECANIQUE POUR DISJONCTEUR D'UNE INSTALLATION ELECTRIQUE HAUTE TENSION**

ELEKTROMECHANISCHER AKTUATOR FÜR SCHUTZSCHALTER EINER ELEKTRISCHEN HOCHSPANNUNGSANLAGE

ELECTROMECHANICAL ACTUATOR FOR A HIGH-VOLTAGE ELECTRICAL INSTALLATION CIRCUIT BREAKER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2018 FR 1870328**

(43) Date de publication de la demande:
**27.01.2021 Bulletin 2021/04**

(73) Titulaire: **Etna Industrie**
**92300 Levallois Perret (FR)**

(72) Inventeurs:
• **GILLOT, Cyrille**
**51000 CHALONS EN CHAMPAGNE (FR)**
• **LAUROZ, Roland**
**69005 LYON (FR)**

(74) Mandataire: **IPAZ**
**16, rue Gaillon**
**75002 Paris (FR)**

(56) Documents cités:
EP-A1- 2 835 811      CN-A- 101 266 893
CN-Y- 200 972 840      CN-Y- 201 364 850
DE-A1- 19 837 009      FR-A- 1 272 826
JP-A- H0 589 755

• **DA SILVA E F ET AL: "Vector control for linear induction motor", INDUSTRIAL TECHNOLOGY, 2003 IEEE INTERNATIONAL CONFERENCE ON MARIBOR, SLOVENIA DEC. 10-12, 2003, PISCATAWAY, NJ, USA,IEEE, vol. 1, 10 December 2003 (2003-12-10), pages 518 - 523, XP010698456, ISBN: 978-0-7803-7852-0**

**Description**

L'invention se rapporte aux disjoncteurs, ou plus généralement aux appareillages qui sont mis en oeuvre pour commander la mise hors tension d'un ouvrage de transport d'électricité haute tension en courant alternatif (domaine HTB, THT/UHT) tel que des lignes de transport d'énergie électrique (lignes haute-tension).

En particulier, l'invention s'intéresse à un actionneur pour de tels disjoncteurs, l'actionneur comportant une commande électromécanique visant à remplacer les commandes oléopneumatiques ou hydropneumatiques existantes afin de permettre l'élimination des défauts d'isolement d'un réseau électrique.

Tout ouvrage de transport d'électricité (lignes, câbles, postes) doit être protégé contre les défauts d'isolement pouvant intervenir dans leur fonctionnement, qu'ils soient d'origine externe ou interne. Les causes externes peuvent être d'origine météorologique (orage, brouillard, givre etc.) ou accidentelle (amorçage avec des corps étrangers ou engins, pollution etc.). Les causes internes ont pour origine le réseau électrique lui-même et sont principalement dues à des avaries de matériels générées par la rupture mécanique ou les vieillissements des isolants (qui concernent aussi bien les lignes que les câbles, les transformateurs, les réducteurs de mesure, les disjoncteurs, etc.) ainsi qu'aux manoeuvres inopportunes liées à une défaillance humaine ou matérielle.

Tout défaut peut engendrer un courant de court-circuit qui doit être éliminé par la mise hors tension de l'ouvrage concerné. Les défauts affectant les différents composants du réseau sont, de fait, la principale cause d'interruption de fourniture d'énergie électrique. Un défaut est dit « fugitif » si, après un isolement de courte durée, l'ouvrage en défaut peut être remis sous tension. Il est dit « permanent » en cas d'avarie requérant une intervention pour réparation ou contrôle avant remise en service du matériel défaillant.

Les courants de court-circuit générés par les défauts d'isolement peuvent provoquer des chutes de tension (ou creux de tension) sur le réseau avec des niveaux et des durées dépendant de la forme des défauts (monophasé ou triphasé), de leur emplacement et des temps d'élimination. Ils peuvent également générer des contraintes techniques et des efforts électrodynamiques au sein des matériels potentiellement dangereux au regard des limites de tenue du matériel.

Compte tenu de la nature de ces contraintes, la durée des défauts d'isolement est déterminante dans la dégradation des différentes installations. La maîtrise des temps d'élimination de ces défauts est donc capitale au bon fonctionnement du réseau électrique.

Lors de l'apparition d'un défaut d'isolement sur un organe du réseau, celui-ci doit donc être mis hors tension via l'ouverture d'un disjoncteur reliant l'organe au reste du réseau. Les protections contre les défauts d'isolement assurent à la fois les fonctions de détection du défaut et de commande du déclenchement des appareils en défaut.

Ces protections doivent donc fonctionner de façon sûre et rapide : les temps limites d'élimination des courts-circuits triphasés francs doivent être minimisés afin de ne pas compromettre la stabilité des groupes de production. Ainsi les temps d'ouverture/fermeture des disjoncteurs doivent atteindre au maximum 50 ms (milliseconde) en 400 kV (kilovolt) ou 70 ms en 225 kV.

A ce jour, il existe différentes formes de disjoncteurs pour de telles installations.

Par exemple, il existe des disjoncteurs à commande oléopneumatique ou hydropneumatique qui comportent des commandes à ressort pour actionner la plupart des disjoncteurs. Ces commandes permettent d'obtenir une mise en vitesse du disjoncteur très rapide en délivrant des énergies très importantes (supérieures à 6 kJ).

Néanmoins, de tels systèmes contraignent les opérateurs des réseaux électriques à effectuer régulièrement des révisions des organes de sécurité soumis à des règlementations (accumulateurs 400 bars etc.) et à déployer des équipes compétentes et certifiées pour la maintenance de ces équipements.

De plus, le système hydraulique présente l'inconvénient de nécessiter une mise au point par prototypage à chaque application, car le réglage des vitesses, des temps de manoeuvre et de freinage de fin de course est réalisé par le dimensionnement de composants mécaniques internes au système (gicleurs, dash-pots etc.).

Par ailleurs, lorsque l'actionneur comprend un système à ressort, on constate que l'énergie disponible à sa mise en oeuvre est limitée car elle impose des tailles de ressorts particuliers. De plus, les caractéristiques dynamiques de tels actionneurs sont difficilement ajustables (vitesse, temps de manoeuvre, freinage de fin de course).

A l'origine de l'invention, on a donc cherché à remplacer ces systèmes hydropneumatiques ou hydromécaniques par un autre système.

On connait des systèmes électriques du type « tout ou rien » : il s'agit d'actionneurs à bobine pour les disjoncteurs moyenne tension ou pour les sectionneurs haute tension à courant continu : l'énergie est alors stockée dans des batteries ou des condensateurs.

De tels actionneurs présentent deux principaux inconvénients : les actionneurs ne comportent pas de système de freinage piloté en fin de course, ce qui limite le niveau d'énergie admissible. Par ailleurs, le fonctionnement en mode « tout ou rien » ne permet pas de contrôler finement les caractéristiques de vitesse et de temps en chaque point de la course de l'équipement mobile.

On connaît du document EP 2 835 811 A1 un actionneur électromécanique pour disjoncteur haute tension tel que décrit dans le préambule de la revendication 1.

On connait encore du document EP 1 573 766 un actionneur pour disjoncteur moyenne tension comprenant un corps magnétique qui délimite un entrefer, une pièce mobile qui est guidée de façon mobile par rapport au corps magnétique, au moins un aimant permanent et au moins un conducteur pouvant être alimenté en courant et disposé au moins en partie dans l'entrefer, le ou les conducteurs s'étendant (lors d'un mouvement de la partie mobile) au moins en partie dans un flux magnétique produit par le ou les aimants permanents.

La partie mobile d'un tel actionneur est solidaire d'un corps de verrouillage à magnétisme doux et le flux magnétique produit par le ou les aimants traverse le corps de verrouillage dans une position de fin de course de la pièce mobile, l'entrefer étant shunté pour le flux magnétique par le corps de verrouillage.

Un tel actionneur ne peut pas être mis en oeuvre dans les disjoncteurs haute tension. En effet, l'énergie nécessaire pour son fonctionnement doit être stockée dans des batteries ou des condensateurs qui délivrent l'énergie trop lentement pour pouvoir fonctionner sur un disjoncteur haute tension. De plus, un tel actionneur ne comporte pas de système de freinage de fin de course, ce qui limite également le niveau d'énergie admissible.

On connait du document JP H05 89775 un disjoncteur pour circuit à gaz compressé et un actionneur électromécanique de commande de ce disjoncteur, qui comporte un équipage mobile entrainé en déplacement sous l'action d'un champ magnétique.

Par ailleurs, encore, on connait du document CN 200 972 840 un autre actionneur pour une installation électrique haute tension, qui met en oeuvre un moteur de type « Voice Coil ».

L'invention vise à proposer un autre actionneur, de type électromécanique, permettant de pallier les inconvénients cités ci-avant et visant à remplacer les actionneurs existants sur des disjoncteurs déjà présents dans les installations haute-tension.

L'invention concerne un actionneur électromécanique pour disjoncteur d'installation à haute tension, ledit actionneur comportant :

- Un équipage mobile entre une position active, suivant laquelle une tige, solidaire de l'équipage mobile, permet la mise sous tension de l'installation et une position inactive, suivant laquelle ladite tige permet la mise hors tension de l'installation,
- Un dispositif de déplacement dudit équipage mobile assurant le passage de l'équipage mobile de la position active à la position inactive, ou inversement,
- Un dispositif de stockage d'énergie électrique,
- Un module de commande du dispositif de déplacement, ledit module de commande assurant le transfert d'énergie entre ledit dispositif de stockage d'énergie et ledit dispositif de déplacement.

Conformément à l'invention, l'actionneur est défini par la revendication 1.

La loi de commande dynamique conformément à l'invention est une loi de commande vectorielle permettant de suivre un profil d'accélération.

Ainsi conçu, l'actionneur permet de générer un mouvement linéaire rapide et contrôlé.

Il permet notamment de s'affranchir de toute transformation de mouvement ou de puissance (comparé aux dispositifs de l'état de la technique) car il permet de convertir directement l'énergie électrique stockée en énergie mécanique de translation. Ce principe même permet de limiter les pertes d'énergie.

Ainsi réalisé, l'actionneur linéaire est apte à faire bouger une charge de quelques dizaines de kilogrammes, soumises à des frottements de fluide importants, sur une distance comprise sensiblement entre 20 et 30 cm et avec une accélération de 30 G à 50 G, durant un temps très court compris entre sensiblement 50 ms et 75 ms.

L'actionneur ainsi réalisé est une machine asynchrone polyphasée (triphasée s'il comporte trois bobines).

L'actionneur peut également comporter les caractéristiques suivantes, prises séparément ou en combinaison : Selon un mode de réalisation avantageux de l'invention, le module de commande assure le transfert d'énergie à chacune desdites au moins trois bobines suivant ladite loi de commande dynamique prédéterminée qui détermine l'alimentation en énergie de chacune des bobines en fonction du temps, ladite loi de commande dynamique assurant :

- Dans un premier temps, une accélération de l'équipage mobile jusqu'à une vitesse maximum, et
- Dans un second temps, une décélération de l'équipage mobile jusqu'à une vitesse minimum sensiblement proche de 0 au voisinage de ladite position inactive.

Par ailleurs, l'actionneur peut comporter des dispositifs amortisseurs pour faire ralentir ledit équipage mobile à proximité de ladite position active et à proximité de la position inactive. Il peut être prévu que les dispositifs amortisseurs comportent des dispositifs de freinage mécanique solidaires du châssis. Il peut également être prévu que le freinage mécanique se combine à l'action du dispositif de commande qui, mettant en oeuvre la loi de commande présentée ci-dessus, assure déjà un freinage « électrique » de l'équipement mobile.

Le matériau conducteur peut comprendre du Dural (alliage de constitution Al 95 / Cu4 / Mg 1) dont la résistivité électrique est sensiblement de 5 $\mu$Ohmcm et dont la conductivité électrique est sensiblement de $2.10^7$ S/m.

Avantageusement, l'un des deux côtés parallèles de l'équipage mobile est positionné à une distance constante du bord desdites bobines ladite distance assurant un entrefer constant entre inducteur et induit compris sensiblement entre 0,5 mm et 1,5 mm, de préférence entre 0,5 mm et 1 mm. De cette façon, cela permet de limiter les arcboutements pour garantir un guidage précis de l'équipage mobile.

Dans le cadre de mode de réalisation avantageux de l'invention, dont l'un sera décrit par la suite, lesdites au moins trois bobines sont positionnées dans des encoches ménagées dans ledit châssis : le fait de loger les bobines dans des encoches permet de minimiser les forces de Laplace qui entraînent des contraintes mécaniques critiques. Les parties saillantes séparant les encoches canalisent les lignes de champs. De cette façon, les bobines sont soumises à un champ magnétique relativement faible et donc à des forces de Laplace négligeables. Ainsi, les forces électromagnétiques sont davantage appliquées à l'équipage mobile qu'aux bobines elles-mêmes et l'intégrité mécanique de l'actionneur s'en trouve nettement améliorée.

En outre, le module de commande peut comporter :

- Un premier dispositif d'électronique de puissance apte à alimenter en énergie le dispositif de stockage d'énergie,
- Un second dispositif d'électronique de puissance, apte à alimenter le dispositif de déplacement à partir du dispositif de stockage d'énergie, apte à générer une fréquence de base comprise entre sensiblement 50 Hz et 400 Hz, et
- Un dispositif d'électronique de commande assurant la commande du fonctionnement des dispositifs d'électronique de puissance suivant ladite loi de commande dynamique.

Avantageusement, le second dispositif d'électronique de puissance est apte à alimenter en énergie le dispositif de stockage d'énergie lors de la décélération de l'équipage mobile. Cela permet de limiter la consommation d'énergie propre à alimenter le dispositif de stockage d'énergie.

Suivant un mode de réalisation préféré de l'actionneur conforme à l'invention, le dispositif de stockage d'énergie comporte au moins un super condensateur présentant une densité de puissance comprise entre 10 et 20 kW/kg (entre 5 et 10 Wh/kg).

Un tel dispositif de stockage d'énergie permet de fournir une énergie suffisante à la séparation des contacts car il développe une puissance croissante à l'ouverture. On comprendra par énergie suffisante une énergie de sensiblement 100 kJ (= 28 Wh).

De plus, un tel dispositif de stockage d'énergie permet une recharge rapide et autorise des décharges profondes, ce qui n'est pas le cas des batteries classiques (la recharge d'un tel dispositif de stockage est aujourd'hui nettement plus importante qu'une batterie qui ne serait pas adaptée à cause de son temps de charge et de décharge beaucoup trop long pour cette application au disjoncteur de réseau Haute tension).

Pour pouvoir être exécutée, l'invention est exposée de façon suffisamment claire et complète dans la description suivante qui est, en plus, accompagnée de dessins dans lesquels :

- La figure 1 est une représentation schématique d'un actionneur conforme à l'invention,
- La figure 2 est une représentation schématique d'une partie de l'actionneur conforme à l'invention, en position active,
- La figure 3 est une représentation schématique de la partie de l'actionneur montrée en figure 2, illustrant l'accélération de l'équipage mobile de l'actionneur au moment du déclenchement du dispositif de commande du passage de la position active à la position inactive,
- La figure 4 est une représentation schématique de la partie de l'actionneur montrée en figure 2, illustrant l'équipage mobile de l'actionneur se déplaçant à une vitesse maximum à un instant prédéterminé,
- La figure 5 est une représentation schématique de la partie de l'actionneur montrée en figure 2, illustrant la décélération de l'équipage mobile de l'actionneur jusqu'à venir en butée contre des moyens amortisseurs, en position finale inactive,
- La figure 6 est une vue en perspective partielle d'un mode de réalisation d'un actionneur conforme à l'invention, en position inactive, l'actionneur comportant un carter de protection vu en transparence,
- La figure 7 est une autre vue en perspective partielle de l'actionneur montré en figure 6, illustrant l'équipage mobile entrainé en déplacement de sa position active vers sa position inactive, le carter de protection ayant été partiellement retiré afin de rendre plus visible l'équipage mobile,
- La figure 8 est une autre vue en perspective partielle de l'actionneur, montré en figures 6 et 7, illustrant l'équipage mobile toujours entrainé en déplacement vers sa position inactive, au moment où l'équipage mobile rentre en collision avec le dispositif amortisseur du châssis,
- Et la figure 9 est une autre vue en perspective partielle de l'actionneur montré en figures 6, 7 et 8, illustrant l'équipage mobile en position inactive arrêté en fin de course notamment par le dispositif amortisseur du châssis, le carter de protection ayant été replacé.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

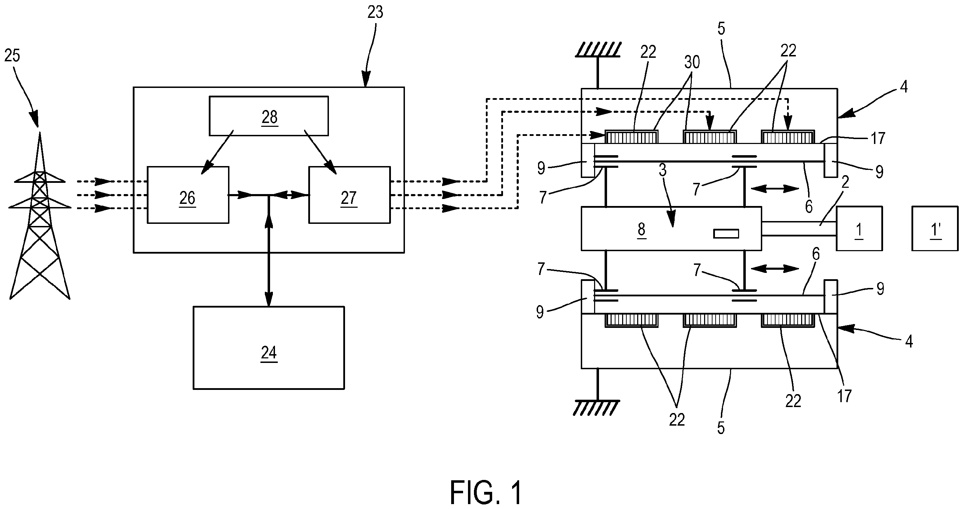

La figure 1 illustre schématiquement un actionneur conforme à l'invention, mis en oeuvre dans un disjoncteur d'une installation haute tension.

Afin de concentrer le lecteur sur la seule partie propre à l'invention, le disjoncteur n'a pas été représenté en entier sur les figures. La seule partie du disjoncteur ayant été montrée concerne l'actionneur du disjoncteur et les moyens techniques qu'il comporte permettant de le faire fonctionner en mettant en mouvement un équipage mobile qu'il comporte pour qu'il assure un contact entre une charge mobile 1, à laquelle l'équipage mobile est relié, et une charge fixe 1' du disjoncteur. Les charges mobile 1 et fixe 1' du disjoncteur sont les contacts du disjoncteur : quand les deux contacts sont fermés (position du disjoncteur appelée par la suite « position active »), ils se touchent et le courant passe (la charge mobile 1 et la charge fixe 1' sont en contact l'une avec l'autre). Quand les deux contacts sont ouverts (position du disjoncteur qui sera appelée par la suite « position inactive »), ils ne se touchent pas et le courant ne passe pas (la charge mobile 1 et la charge fixe 1' sont éloignées l'une de l'autre).

La charge mobile 1 et la charge fixe 1' sont montrées en figure 1 : elles sont symbolisées chacune par un carré à droite de la figure.

La figure montre que les charges mobile 1 et fixe 1' sont éloignées l'une de l'autre : le disjoncteur est en position inactive.

Pour que la charge mobile 1 touche la charge fixe 1', l'actionneur comporte un équipement mobile 3 portant une tige 2 qui est également en contact avec la charge mobile 1 : l'équipement mobile 3 portant la tige 2 en contact avec la charge mobile 1 doit être déplacé pour que la charge mobile 1 entre en contact avec la charge fixe 1'. Dans cette position, l'installation fonctionne.

En cas de défaut (du disjoncteur ou autre), par exemple un court-circuit, le déplacement de l'équipement mobile 3 entraine le déplacement de la tige 2 qui tire sur la charge mobile 1 : les deux parties de charge 1 et 1' se séparent et le disjoncteur est alors « ouvert » : dans cette position, le courant ne circule plus dans l'installation.

Pour remettre en fonctionnement l'installation, on commande de nouveau le déplacement de l'équipage mobile 3 de l'actionneur qui déplace de nouveau la tige 2 qui pousse la charge mobile 1.

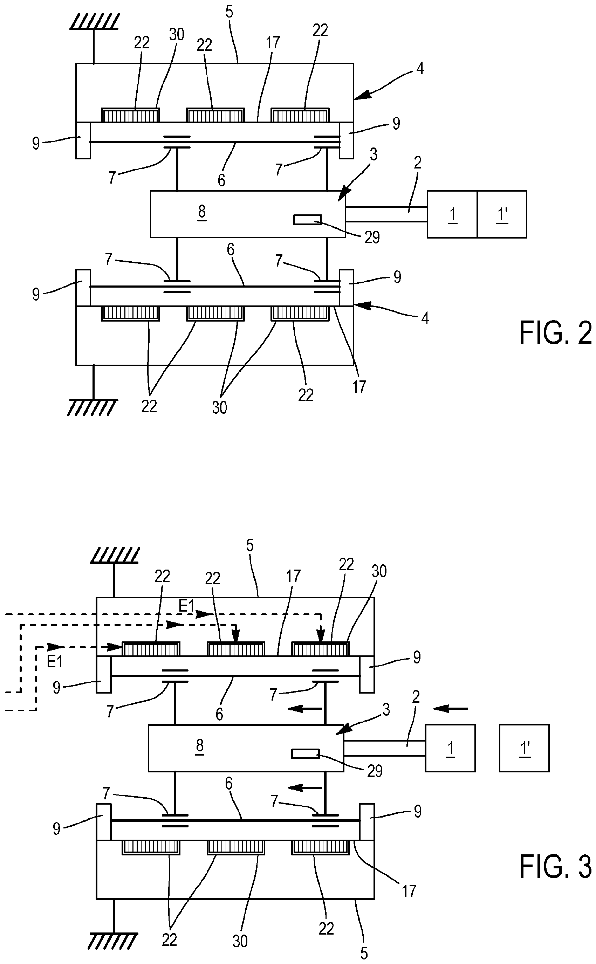

Le déplacement de la charge mobile 1 pour passer de la position active à la position inactive, ou inversement, sera décrite par la suite en faisant référence aux figures 2 à 5.

Ce mode de fonctionnement d'une tige 2 d'un équipage mobile d'un actionneur, poussant ou tirant sur une charge mobile, est classique en soit. L'homme du métier saura réaliser les deux parties de charge du disjoncteur qui ne font pas l'objet de l'invention.

Conformément à l'invention, l'actionneur comporte un dispositif de déplacement, commandant le déplacement de l'équipage mobile 3 dans un sens ou dans un autre pour commander la position active ou la position inactive de l'actionneur.

Il est à noter que la tige 2 présente une longueur comprise entre sensiblement 20 et 30 cm. Ainsi, le dispositif de déplacement 4 est en mesure de déplacer l'équipage mobile sur une distance sensiblement comprise entre 20 et 30 cm.

Par ailleurs, la charge mobile 1 à déplacer représente une masse de plusieurs dizaines de kilogrammes (environ 20 kg).

Le dispositif de déplacement porte la référence 4 sur les figures. Il comporte un châssis 5, rectiligne sur la figure, comportant deux rails de guidage 6, parallèles entre eux et s'étendant suivant la longueur du châssis.

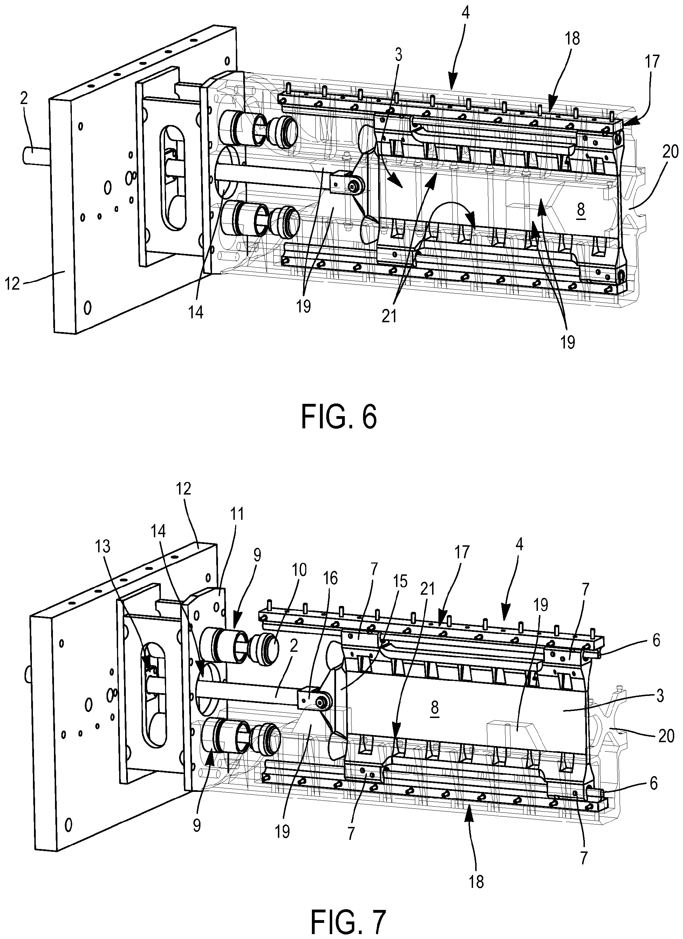

L'équipage mobile 3 est monté mobile en translation entre les deux rails de guidage 6. Pour ce faire, il comporte (par exemple) des patins 7 équipés de guidages en Polytétrafluoroéthylène montés sur les rails. Les figures 6 à 9 montrent un exemple de patins 7.

L'équipage mobile comporte également une plaque 8 de forme sensiblement rectangulaire réalisée en matériau conducteur, dont la résistivité électrique est sensiblement de quelques $\mu$Ohmcm et dont la conductivité électrique est de $10^{-7}$ à $5.10^{-7}$ S/m.

De préférence, la plaque est réalisée en alliage d'aluminium, par exemple en Dural (Al95 / Cu4 / Mg1) dont la résistivité électrique est sensiblement de 5 $\mu$Ohmcm et dont la conductivité électrique est de $2.10^{-7}$ S/m.

Les patins 7 sont fixés aux deux extrémités des grands côtés de la plaque 8, les deux grands côtés étant ceux qui sont parallèles aux deux rails de guidage 6 du châssis 5.

A chacune des extrémités des deux rails de guidage 6, se trouvent deux dispositifs amortisseurs 9 permettant d'amortir la fin de course de l'équipage mobile 3.

Les dispositifs amortisseurs 9 peuvent être fixés sur la partie du châssis 5 qui supporte les rails de guidage 6 comme montrés en figures 2 à 5.

Ils peuvent également se trouver à d'autres endroits du châssis 5 comme, par exemple, dans le mode de réalisation illustré sur les figures 6 à 9. Dans ce cas, les dispositifs amortisseurs 9 comportent des systèmes à vérin hydraulique présentant un pion mobile 10 contre lequel vient buter un chapeau de pion, fixé sur la tranche de la plaque 8 de l'équipage mobile.

Les dispositifs amortisseurs assurent alors un freinage en douceur de l'équipage mobile entrainé en déplacement au voisinage des deux extrémités des rails 6 : ils permettent ainsi un ralentissement de l'équipage mobile à proximité des positions extrêmes de l'équipage mobile 3 sur les rails 6, correspondant aux positions active et inactive de l'actionneur.

Le dispositif amortisseur est, quant à lui, fixé sur une platine 11, perpendiculaire à l'équipage mobile et elle-même fixée sur un plateau 12 permettant de fixer cette partie de l'actionneur à l'autre partie du disjoncteur non représentée sur les figures.

Le plateau 12 et la platine 11 présentent chacun une ouverture traversante 13 et 14, respectivement, livrant passage à la tige 2 solidarisée à l'équipage mobile. L'ouverture traversante 13 présente un diamètre proche de celui de la tige 2, de manière à guider la tige 2 lorsque cette dernière se déplace à travers l'ouverture 13 quand l'équipage mobile est entrainé en mouvement.

Les figures 7 à 9 montrent un exemple de montage de la tige 2 sur l'équipage mobile 3 : La tige 2 est fixée sur une pièce 15, elle-même fixée sur la tranche de la plaque 8. Plus précisément, la pièce 15 est fixée et prend appui sur sensiblement toute la largeur de la plaque 8. Un montant 16, recevant l'extrémité de la tige 2, est fixé sensiblement au milieu de la longueur de la pièce 15.

Les figures 7 à 9 montrent également que les deux parties de châssis 17 portant les rails 6 sont coiffées chacune d'un carter de protection 18 en forme de U.

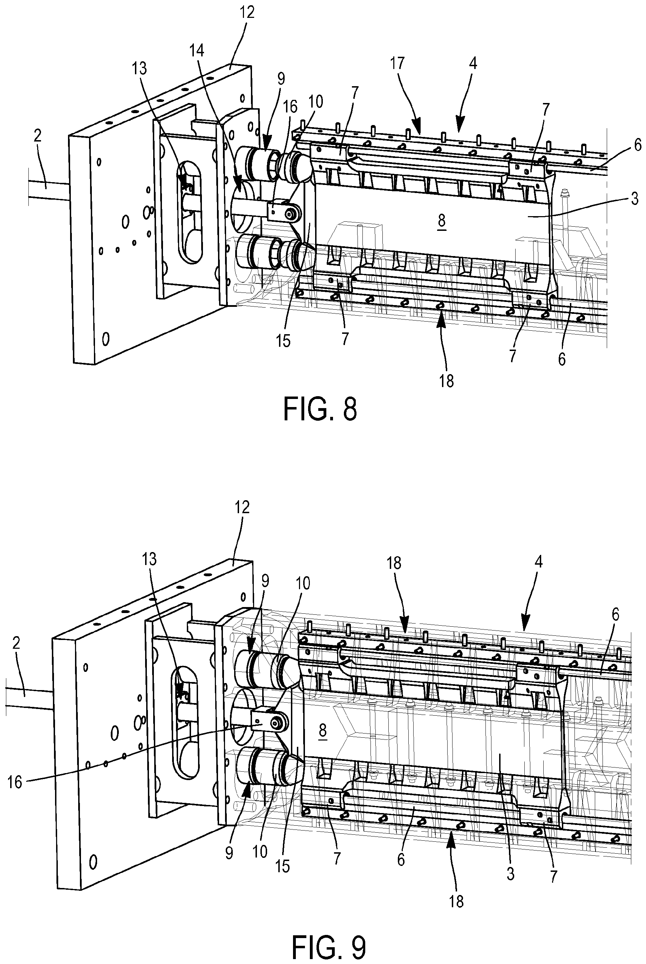

Les carters de protection 18 supérieurs ont été retirés sur les figures 7 et 8 afin de mieux visualiser les éléments que comportent l'actionneur linéaire. Les carters de protection 18 supérieur et inférieur sont toutefois visibles tous les deux sur les figures 6 et 9.

Les carters de protection 18 supérieur et inférieur sont solidarisés l'un avec l'autre au moyen de pièces de raccordement latérales 19 et d'extrémité 20.

De part et d'autre de la plaque 8 de l'actionneur, deux pièces de raccordement latérale 19 de forme trapézoïdale sont solidarisées sur les extrémités libres 21 des carters supérieur et inférieur 18 en forme de U. Les carters de protection inférieur et supérieur sont solidarisés latéralement en solidarisant ensemble les pièces de raccordement latérales 19.

Au voisinage de l'extrémité libre des parties de châssis 17 portant les rails 6, les carters de protection 18 sont solidarisés en étant fixés à la pièce de raccordement d'extrémité 20 en forme de croix. Cette dernière pièce de raccordement 20 s'étend suivant un plan perpendiculaire à celui de la plaque 8 (voir figures 6 et 7).

Pour entrainer en déplacement l'équipage mobile 3, l'actionneur comporte d'autres éléments conformes à l'invention qui vont maintenant être présentés en faisant référence à la figure 1.

Tout d'abord, l'invention assure un déplacement de l'équipage mobile par induction.

C'est ainsi que le dispositif de déplacement 4 de l'équipage mobile est équipé de plusieurs bobines 22 qui, quand elles sont alimentées en énergie, créent un champ magnétique capable d'entrainer le déplacement de la plaque 8 de l'équipage mobile : en effet, le champ magnétique glissant créé dans l'entrefer assure le déplacement de la plaque 8 conductrice, conformément à la loi de Lenz.

Les bobines n'ont pas été représentées sur les figures 6 à 9 mais sont symboliquement représentées sur les autres figures par les éléments portant la référence 22.

Les bobines 22 sont fixées sur les parties de châssis 17 du dispositif de déplacement. Plus précisément, chaque partie de châssis 17 comporte trois bobines 22, espacées d'un intervalle déterminé constant (typiquement 1 cm : ceci est lié au déplacement souhaité, à la longueur de l'induit et à sa fréquence d'alimentation).

Il est prévu de placer les bobines à une distance constante des bords de la plaque 8, cette distance devant assurer un entrefer constant entre inducteur et induit qui est compris entre 0,5 et 1,5 mm, et de préférence entre 0,5 et 1 mm.

Grâce à un tel entrefer, on évite les arcboutements, ce qui permet de garantir un guidage précis de l'équipage mobile 3.

Il est également prévu que les bobines soient placées dans des encoches 30 ménagées dans les parties de châssis 17 du dispositif de déplacement 4. Ce mode de réalisation permet de minimiser les forces de Laplace qui entraînent des contraintes mécaniques critiques : les parties saillantes séparent les encoches canalisent les lignes de champs. De cette façon, les bobines sont soumises à un champ relativement faible et donc à des forces de Laplace négligeables. Ainsi, les forces électromagnétiques sont davantage appliquées à l'équipage mobile 3 qu'aux bobines 22 elles-mêmes, et l'intégrité mécanique de l'actionneur s'en trouve nettement améliorée.

Pour rappel, les forces de Laplace sont des forces électromagnétiques qui sont exercées par un champ magnétique sur un conducteur parcouru par un courant.

Les bobines 22 prévues sont au nombre de trois car le courant utilisé pour faire fonctionner l'actionneur est un courant triphasé : chaque phase correspond alors à l'alimentation d'une bobine 22.

Il devra être entendu que l'invention n'est pas limitée à la mise en oeuvre de trois bobines : l'actionneur pourrait en comprendre plus sans sortir du cadre de l'invention, du moment qu'il en comprend au moins trois.

La conception des bobines adaptées à un tel actionneur est à portée de l'homme du métier qui saura utiliser les équations analytiques de l'ALI.

On va maintenant s'intéresser aux éléments mis en oeuvre permettant d'alimenter les bobines 22 de sorte à entrainer le mouvement de l'équipage mobile 3.

La figure 1 montre schématiquement que l'actionneur conforme à l'invention comporte un module de commande 23 qui permet de commander le fonctionnement du dispositif de déplacement 4.

Conformément à l'invention, l'actionneur comporte également un dispositif de stockage d'énergie électrique 24.

Le module de commande 23 assure le transfert d'énergie entre le dispositif de stockage 24 et le dispositif de déplacement 4.

Il est à noter que le module de commande est alimenté lui-même en énergie par le réseau électrique 25.

Dans le cas présent, l'énergie mise en oeuvre par l'actionneur pour assurer la dynamique de la charge est de l'ordre de la centaine de kJ. Cette valeur est assez importante et le réseau triphasé classique ne peut pas fournir cette énergie pendant le laps de temps du mouvement de déplacement de l'équipage mobile sans subir une baisse de tension locale.

C'est pourquoi l'actionneur conforme à l'invention met en oeuvre un dispositif de stockage d'énergie 24 pour stocker et rendre disponible la quantité d'énergie nécessaire au fonctionnement de l'actionneur.

Plusieurs solutions de dispositif de stockage d'énergie ont été envisagées pour la conception de l'actionneur : les solutions électrolytiques ou apparentées étaient intéressantes à envisager car elles supportent bien les tensions continues importantes mais au prix d'une valeur de capacité électrique faible. C'est pourquoi elles n'ont pas été retenues.

A contrario, la technologie des super capacités ou super condensateurs, arrivés à maturité depuis la fin des années 1990, a été retenue car elle permet non seulement de stocker une valeur de capacité électrique élevée, elles supportent bien les tensions continues et elles assurent une décharge d'énergie extrêmement rapidement : il est à noter, concernant la capacité de stockage, qu'un super condensateur a une capacité sensiblement 10 000 fois plus importante que la capacité d'un condensateur classique.

Ainsi, le dispositif de stockage d'énergie 24 choisi est un super condensateur présentant une densité de puissance comprise sensiblement entre 10 et 20 W/kg.

Un tel dispositif de stockage permet ainsi de fournir une énergie suffisante à la séparation des contacts du disjoncteur car il développe une puissance croissante à l'ouverture. On comprendra par « énergie suffisante » une énergie de sensiblement 100 kJ.

De plus, un tel dispositif de stockage d'énergie permet une recharge rapide (nettement plus importante qu'une batterie qui ne serait pas adaptée à l'application de l'actionneur conforme à l'invention, car la batterie mettrait trop de temps à se charger et à se décharger).

Il devra être compris que d'autres dispositifs de stockage d'énergie pourraient être mis en oeuvre sans sortir du cadre de l'invention : par exemple, des dispositifs permettant de grande capacité de stockage et assurant une décharge rapide de l'énergie stockée pourraient être envisagés, comme les systèmes à volant d'inertie, les systèmes de stockage thermique, de stockage chimique ou électrochimique etc.

La figure 1 montre que le supercondensateur 24 est alimenté en énergie par le module de commande 23 et, en particulier, par un premier dispositif d'électronique de puissance 26 relié au réseau électrique 25 d'une part, et par un second dispositif d'électronique de puissance 27 relié au dispositif de déplacement 4.

Le réseau électrique 25 est un réseau 400 V triphasé.

Le premier dispositif d'électronique de puissance 26 est un hacheur 26 qui permet de transformer le courant du réseau triphasé 25 en courant de charge pour le super condensateur 24, pour la première utilisation de l'actionneur conforme à l'invention.

Après une première utilisation, le hacheur 26 permet de compléter la charge du super condensateur 24 car, lors de la mise en oeuvre de l'actionneur conforme à l'invention, le super condensateur libère son énergie dans un premier temps puis récupère une partie de l'énergie transmise pour faire fonctionner l'actionneur (ce mode de fonctionnement propre à l'invention sera décrit par la suite).

Le second dispositif d'électronique de puissance 27 est un onduleur 27 qui permet de transformer l'énergie libérée du super condensateur 24 en courant triphasé, chaque phase de courant permettant d'alimenter en énergie une bobine (d'où la mise en oeuvre de 3 bobines au moins).

Lors du fonctionnement de l'actionneur, l'onduleur 27 permet également de transformer l'énergie restituée par le dispositif de déplacement en énergie pour alimenter le super condensateur (ceci sera décrit par la suite).

L'onduleur est apte à générer une fréquence de base comprise entre sensiblement 50 Hz et 400 Hz.

Dans ce mode de réalisation, il est prévu que le module de commande comporte également une charge de dissipation commandable qui est enclenchée automatiquement sur un bus continu pour protéger le bus continu et le hacheur lors de la restitution d'énergie. Cette charge n'a pas été illustrée sur la figure pour en simplifier la lecture.

Le stockage d'énergie a été calculé de la façon suivante :
En considérant l'énergie développée totale de l'actionneur pour la séparation d'un seul contact et à partir de caractéristiques techniques indiquées dans le tableau ci-dessous, il est possible de dimensionner la capacité minimale requise pour le stockage de l'énergie électrique dans le super condensateur 24 (pouvant comporter plusieurs modules). L'énergie consommée est maximale pour la phase de l'ouverture des contacts, cette phase sert donc de base pour les calculs préliminaires :

| Tension de bus continu en opération, cas défavorable en énergie ($V_{DC}$) | 488 |
|---|---|
| Capacité de condensateur nécessaire (F) | 0,84 |
| Capacité d'un module (F) | 5,8 |
| Tenue en Tension d'un module ($V_{DC}$) | 160 |
| Nombre de modules en série pour la tenue en tension, cas défavorable en tension (bus DC à 563 $V_{DC}$) | 4 |
| Capacité finale de la branche série (F) | 1,45 |
| Energie disponible, cas défavorable en énergie (bus DC à 488 $V_{DC}$) (kJ) | 172,5 |

Le stockage de l'énergie doit s'effectuer sur bus continu issu du redressement du réseau 400 V triphasé. Cette tension est située entre 488 $V_{DC}$ et 563 $V_{DC}$, avec une valeur moyenne de 538 $V_{DC}$.

La capacité nécessaire peut donc être déterminée via l'expression de l'énergie stockée dans un condensateur en prenant le pire des cas pour la tension de bus continu, soit 488 $V_{DC}$, et pour une énergie demandée arrondie à 100kJ (la valeur exacte pour la phase d'accélération est de 97,25 kJ), soit :

$$E = 1/2 \; C.V_{DC}^2 \quad \text{d'où} \quad C = 2. \; E / V_{DC}^2 = 2. \; 100 \; kJ / 488^2 = 0{,}84 \; F$$

Avec cette valeur d'énergie, on peut choisir des modules de super condensateur du commerce adaptés pour réaliser le super condensateur 24 nécessaire.

Conformément à l'invention, l'énergie stockée dans le super condensateur 24 et transmise au dispositif de commande 4 est libérée suivant une loi de commande dynamique prédéterminée qui est imposée par un dispositif d'électronique de commande 28 montré en figure 1, que comporte le module de commande 23.

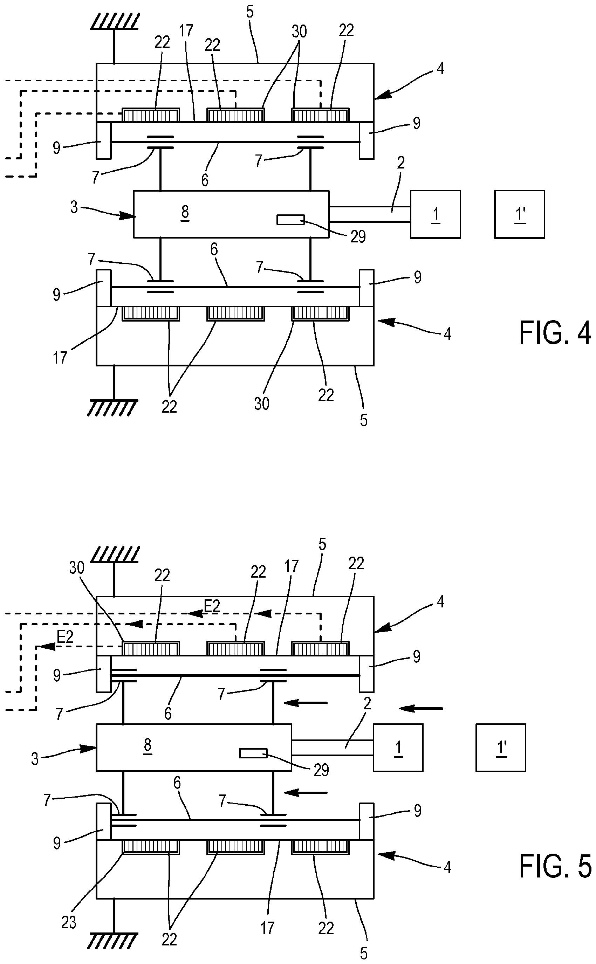

La loi de commande dynamique assure deux phases de déplacement de l'équipage mobile 3 sur les rails 6 du châssis du dispositif de déplacement 4 : une première phase consiste en une mise en mouvement de l'équipage mobile 3 suivant une accélération (figure 3), jusqu'à ce que l'équipage mobile 3 atteigne une vitesse maximum (figure 4). Puis, dans une seconde phase, l'équipage mobile est ralenti dans sa course (figure 5) jusqu'à venir rencontrer les moyens amortisseur 9 situés à l'extrémité du rail 6.

Une loi de commande vectorielle est élaborée par un calculateur numérique pour élaborer cette loi, le calculateur peut ou non prendre en compte les informations de vitesse, de position ... issues de capteurs ou calculées.

Un commutateur de puissance alimente les différentes bobines du stator dans des combinaisons et des séquences temporelles définies par la loi de commande. Ces séquences et combinaisons sont définies de façon à suivre un profil d'accélération (ou de freinage si l'accélération est négative) prédéfini.

Le stator génère ainsi un champ magnétique mobile de translation qui entraine la partie mobile de l'actionneur.

Dans le cadre de l'invention, l'équipage mobile est piloté par le dispositif de déplacement en courant alternatif par un onduleur multi phasé à fréquence variable, qui crée un champ mobile dans les bobines du stator. La loi de commande est vectorielle.

Ainsi, l'invention met en oeuvre un dispositif de contrôle qui pilote un onduleur via une loi de commande vectorielle afin de générer un champ magnétique translatif.

Le dispositif d'électronique de commande 28 assure la commande du fonctionnement des dispositifs d'électronique de puissance suivant cette loi de commande dynamique pour permettre la réalisation des deux phases mentionnées ci-dessus.

Plus précisément, le dispositif d'électronique de commande 28 comporte un microcontrôleur programmé qui assure cette mise en oeuvre.

La commande est réalisée à base d'un TMS380 (Technical Micro System) ; ce composant est usuellement utilisé pour ce type d'application et il est fiable. Par ailleurs, il dispose d'un grand nombre d'entrées (entrées « tout ou rien » ou entrées analogique) et de sorties (PWM haute résolution).

Le composant permet un découpage du signal pour les signaux de commande : la période de découpage prévue est de sensiblement 8 Hz. Les fréquences fondamentales à injecter se situent entre 50 et 200 Hz. Un signal vectoriel de type « sweep sinus » de fréquence montante (accélération) puis descendante (décélération ou freinage) est créé par le TMS 320 du dispositif de commande 28, puis envoyé sur l'électronique de puissance, c'est-à-dire l'onduleur 27.

Un réseau triphasé équilibré « sweep sinus » est donc ensuite injecté dans le dispositif de déplacement 4.

La programmation du microcontrôleur est effectuée via MATLAB® Simulink® (ce sont des logiciels de programmation et simulation). Puis, le modèle de commande est ensuite interprété par le logiciel CODE COMPOSER STUDIO (logiciel de développement) pour être automatiquement transformé en langage C, compilé ensuite en langage machine injecté dans la cible.

Cette méthode permet de réaliser un développement rapide.

Le microcontrôleur du dispositif d'électronique de commande permet alors de commander précisément le mouvement de l'équipage mobile 3 entre les deux extrémités des rails du dispositif de déplacement 4, chacune des extrémités correspondant à la position active ou à la position inactive de l'actionneur (ou du disjoncteur en général, chacune des positions assurant respectivement le passage du courant dans l'installation ou la coupure du passage du courant).

La loi de commande dynamique permet ainsi, lors du déclenchement de l'actionneur, de déplacer l'équipage mobile suivant une première phase d'accélération, puis suivant une seconde phase de décélération ou de freinage.

Lors de la phase d'accélération, chacune des trois bobines est alimentée pour entrainer en déplacement la plaque 8 : les bobines 22 sont alimentées de sorte à attirer la plaque 8, la plaque 8 suivant le sens d'alimentation des bobines 22.

Lors de la phase de freinage ou décélération, les bobines 22 récupèrent l'énergie générée par le déplacement de la plaque et transmettent cette énergie à l'électronique de puissance (l'onduleur 27) qui transforme de nouveau cette énergie pour alimenter le super condensateur 24 qui se recharge au moins partiellement à nouveau. Le complément d'énergie manquant au super condensateur est fourni par le hacheur 26 à partir de l'énergie du réseau 400 V triphasé.

Il va maintenant être fait référence aux figures 2 à 5 pour décrire le passage de l'actionneur de la position active à la position inactive.

La figure 2 montre une partie de l'actionneur conforme à l'invention (le dispositif de déplacement 4 et l'équipage mobile 3) en position telle que le disjoncteur est en position active : on note que dans le cette position la tige 2 de l'actionneur est solidaire avec la partie mobile de la charge 1 du disjoncteur, et que la charge mobile 1 est en contact avec la charge fixe 1' autorisant ainsi le passage du courant dans l'installation haute tension.

Dans cette position encore, l'équipage mobile 3 se trouve en butée contre des dispositifs amortisseurs placés à une extrémité des rails 6 du dispositif de déplacement 4 (l'équipage se trouve à l'extrême droite des rails 6 sur la figure 2).

Quand une anomalie est détectée et que le disjoncteur doit être déclenché, le dispositif d'électronique de commande 28 déclenche le processus de déconnection et commande la libération de l'énergie contenu dans le super condensateur 24.

L'énergie libérée est alors transmise suivant la loi de commande dynamique du dispositif d'électronique de puissance 28 au dispositif de déplacement 4 de l'actionneur. Plus particulièrement, comme l'illustre schématiquement la figure 3, l'énergie E1 est fournie à chaque bobine 22 suivant la loi de commande.

L'équipage mobile 3 se déplace alors sur les rails 6 (mouvement vers la gauche) suivant une accélération durant un certain lapse de temps (accélération propre à la phase 1 de la loi de commande dynamique). La tige 2 entraine alors sur la charge mobile 1 qui se déplace ; jusqu'à ce que la charge mobile 1 s'écarte de la charge fixe 1', provoquant ainsi l'ouverture des contacts du disjoncteur. Le courant ne passe plus dans l'installation haute tension.

L'équipage mobile 3 continue sa course jusqu'à atteindre la vitesse maximum, qui est illustrée en figure 4.

La position de l'équipage mobile 3 à cette vitesse est repérée grâce à la présence d'un capteur de position 29 embarqué sur l'équipage mobile.

A cette position illustrée en figure 4, les bobines ne sont plus réceptrices mais elles deviennent génératrices pour générer un freinage.

Puis, la loi de commande dynamique commande le freinage de l'équipage mobile 3 qui ralentit sa course jusqu'à venir buter contre les dispositifs amortisseurs 9 peu après avoir atteint une vitesse très basse, proche de 0.

L'équipage mobile 3 se trouve alors en position d'extrémité contre les dispositifs amortisseurs (position à l'extrême gauche des rails 6 sur la figure 5), ce qui correspond à la position inactive du disjoncteur.

Lors du ralentissement de l'équipage mobile 3, l'énergie E2 produite par le déplacement de l'équipage mobile 3 par rapport aux bobines 22 est récupérée et transmise au module de commande 23, et en particulier à l'onduleur 27 qui recharge alors partiellement le super condensateur 24.

Le super condensateur 24 est alimenté en complément d'énergie par le hacheur pour être de nouveau utilisé.

Les figures 6 à 9 montrent le réenclenchement du disjoncteur.

Lorsque le défaut ou le problème électrique est résolu et que l'installation haute tension peut être remise en service, on commande le réarmement du disjoncteur en position active.

Pour ce faire, de nouveau, le module de commande libère de l'énergie pour faire passer l'équipage mobile de la position inactive montrée en figure 6 (ou en figure 5) à la position active montrée en figure 9 (ou en figure 2).

On note sur la figure 7 que les dispositifs amortisseurs 9 se trouvent en position déployée, prêts à recevoir l'équipage mobile 3 en mouvement : l'équipage mobile est positionné, suivant cette vue en perspective, à droite des rails 6 de guidage du dispositif de déplacement 4 (voir en particulier la figure 7).

La loi de commande appliquée est la même que celle appliquée pour faire passer l'équipage mobile de la position active à la position inactive : dans un premier temps, l'équipage mobile 3 accélère jusqu'à atteindre une vitesse maximale, puis décélère jusqu'à atteindre une vitesse proche de 0 à proximité de la position active.

L'équipage mobile est ainsi entrainé en déplacement de manière que l'extrémité de la tige 2 se déplace en s'éloignant du dispositif de déplacement 4 et du plateau 12.

En se déplaçant ainsi, la tige 2 entraine la charge mobile 1qui se déplace alors sous l'effet de la poussée exercée par la tige 2 jusqu'à ce qu'elle provoque la fermeture des contacts du disjoncteur (charges mobile 1 et fixe 1').

Les figures 8 et 9 montrent l'équipage mobile en fin de course sur les rails 6, quand la plaque 8 vient au contact des dispositifs amortisseurs 9 : la figure 8 montre la rencontre de l'équipage mobile 3 avec le pion mobile 10 du dispositif amortisseur, tandis que la figure 9 montre le pion mobile 10 quand il rentre dans le dispositif amortisseur sous l'effet de la poussée de l'équipage mobile.

Dans cette position extrême, la charge fixe 1' est en contact avec la charge mobile 1 : les contacts du disjoncteur sont ainsi fermés.

C'est ainsi que le disjoncteur se trouve de nouveau en position active et que le courant est autorisé à circuler dans l'installation haute tension.

On comprend de ce qui précède comment l'actionneur conforme à l'invention permet de faire fonctionner un disjoncteur d'une installation haute tension.

Il devra être compris que l'invention n'est pas limitée au mode de réalisation spécifiquement représenté sur les figures 6 à 9 qui n'illustrent qu'un exemple de conception.

Notamment, les formes des pièces réalisant le dispositif de déplacement ou celles réalisant l'équipage mobile pourraient être différentes sans sortir du cadre de l'invention.

De même, les dispositifs amortisseurs 9 pourraient être différents : il pourrait être envisagé de prévoir des dispositifs de type mâchoires à chaque extrémité des rails, directement sur le dispositif de déplacement. De tels dispositifs de type « mâchoires » pourraient assurer une immobilisation de l'équipage mobile en fin de course pour éviter que ce dernier ne vienne buter contre un élément fixe du dispositif de déplacement à l'extrémité des rails.

De même le calculateur numérique peut être de tout autre type que le microcontrôleur TMS 320.

## Revendications

1. Actionneur électromécanique pour disjoncteur d'une installation électrique haute tension, ledit actionneur comportant :

   - Un équipage mobile (3) entre :

      o Une position active, suivant laquelle une tige (2), solidaire de l'équipage mobile (3), permet la mise sous tension de l'installation et
      o Une position inactive, suivant laquelle ladite tige (2) permet la mise hors tension de l'installation,

   - Un dispositif de déplacement (4) dudit équipage mobile (3), comportant un châssis (5) et assurant le passage de l'équipage mobile (3) de la position active à la position inactive, ou inversement,
   - Un dispositif de stockage d'énergie électrique (24),
   - Un module de commande (23) du dispositif de déplacement (4), ledit module de commande (23) assurant le transfert d'énergie entre ledit dispositif de stockage d'énergie (24) et ledit dispositif de déplacement (4),

   dispositif de déplacement (4) assure un déplacement linéaire par induction de l'équipage mobile (3) équipé de la tige (2) et comporte à cet effet une série d'au moins trois bobines (22) insérées dans un circuit magnétique positionné sur le châssis (5)
   **caractérisé en ce que**
   l'équipage mobile (3) est monté mobile en déplacement sur au moins un rail (6) dudit châssis (5) et comporte un matériau conducteur apte à se déplacer sous l'effet d'un champ magnétique généré par chacune desdites au moins trois bobines (22) lorsque ces dernières sont alimentées en énergie électrique par le dispositif de commande (23) suivant une loi de commande dynamique prédéterminée, ladite loi de commande dynamique étant une loi de commande vectorielle permettant de suivre un profil d'accélération, **et en ce que** ledit équipage mobile (3) comporte une plaque (8) en matériau conducteur, de forme sensiblement rectangulaire présentant deux côtés parallèles à l'au moins un rail (6) de guidage fixé au châssis (5).

2. Actionneur électromécanique selon la revendication 1, **caractérisé en ce que** le module de commande (23) assure le transfert d'énergie à chacune desdites au moins trois bobines (22) suivant ladite loi de commande dynamique prédéterminée, ladite loi de commande vectorielle déterminant l'alimentation en énergie de chacune des bobines (22) en fonction du temps et assurant :

- Dans un premier temps, une accélération de l'équipage mobile jusqu'à une vitesse maximum, et
- Dans un second temps, une décélération de l'équipage mobile jusqu'à une vitesse minimum sensiblement proche de 0 au voisinage de ladite position inactive.

3. Actionneur selon la revendication 1 ou 2, **caractérisé en ce qu'**il comporte des dispositifs amortisseurs (9) pour faire ralentir ledit équipage mobile (3) à proximité de ladite position active et à proximité de la position inactive.

4. Actionneur électromécanique selon la revendication 3, **caractérisé en ce que** les dispositifs amortisseurs (9) comportent des dispositifs de freinage mécanique solidaires du châssis (5).

5. Actionneur électromécanique selon l'une quelconque des revendications précédentes, **caractérisé en ce que** l'un des deux côtés parallèles de l'équipage mobile (3), est positionné à une distance constante du bord desdites bobines (22), ladite distance assurant un entrefer constant entre inducteur et induit compris sensiblement entre 0,5 mm et 1,5 mm, de préférence entre 0,5 mm et 1 mm.

6. Actionneur selon l'une quelconque des revendications précédentes, **caractérisé en ce que** lesdites au moins trois bobines (22) sont positionnées dans des encoches (30) ménagées dans ledit châssis (5).

7. Actionneur selon l'une quelconque des revendications précédentes, **caractérisé en ce que** le module de commande (23) comporte :

- Un premier dispositif d'électronique de puissance (26) apte à alimenter en énergie le dispositif de stockage (24) d'énergie,
- Un second dispositif d'électronique de puissance (27) apte à alimenter le dispositif de déplacement (4) à partir du dispositif de stockage d'énergie, apte à générer une fréquence de base comprise entre sensiblement 50 Hz et 400 Hz, et
- Un dispositif d'électronique de commande (28) assurant la commande du fonctionnement des dispositifs d'électronique de puissance (26, 27) suivant ladite loi de commande dynamique vectorielle.

8. Actionneur électromécanique, selon les revendications 2 et 7, **caractérisé en ce que** le second dispositif d'électronique de puissance (27) est apte à alimenter en énergie le dispositif de stockage d'énergie (24) lors de la décélération de l'équipage mobile (3).

9. Actionneur électromécanique selon l'une quelconque des revendications précédentes, **caractérisé en ce que** le dispositif de stockage d'énergie (24) comporte au moins un super condensateur présentant une densité de puissance comprise entre 10 et 20 W/kg.

**Patentansprüche**

1. Elektromechanischer Aktuator für einen Schutzschalter einer elektrischen Hochspannungsanlage, wobei der Aktuator aufweist:

- ein Element (3), bewegbar zwischen

  ∘ einer aktiven Position, in welcher eine fest mit dem mobilen Element (3) verbundene Stange (2) die Spannungszuschaltung der Anlage ermöglicht, und
  ∘ einer inaktiven Position, in welcher die Stange (2) die Spannungsabschaltung der Anlage ermöglicht,

- eine Vorrichtung (4) zum Verschieben des bewegbaren Elements (3), die ein Gestell (5) aufweist und den Übergang des bewegbaren Elements (3) von der aktiven Position zu der inaktiven Position oder umgekehrt gewährleistet,

- eine Vorrichtung (24) zum Speichern elektrischer Energie,
- ein Modul (23) zum Steuern der Verschiebungsvorrichtung (4), wobei das Steuermodul (23) die Übertragung von Energie zwischen der Energiespeichervorrichtung (24) und der Verschiebungsvorrichtung (4) gewährleistet, wobei die Verschiebungsvorrichtung (4) eine lineare Induktionsbewegung des mit der Stange (2) versehenen bewegbaren Elements (3) gewährleistet und zu diesem Zweck mindestens der Spulen (22) aufweist, welche in einen auf dem Gestell (5) angeordneten Magnetkreis eingesetzt ist,

**dadurch gekennzeichnet,**

**dass** das bewegbare Element (3) auf mindestens einer Schiene (6) des Gestells (5) verschiebbar angebracht ist und ein leitfähiges Material aufweist, das in der Lage ist, sich unter Einwirkung eines durch jede der mindestens drei Spulen (22) erzeugten Magnetfeldes zu bewegen, wenn diese durch die Steuervorrichtung (23) nach einem vorgegebenen dynamischen Regelgesetz mit elektrischer Energie gespeist werden, wobei das dynamische Regelgesetz ein vektorielles Regelgesetzt ist, das es ermöglicht, einem Beschleunigungsprofil zu folgen, **und dass** das bewegbare Element (3) eine im Wesentlichen rechteckige Platte (8) aus leitfähigem Material mit zwei Seiten aufweist, welche zu der mindestens einen an dem Gestell (5) angebrachten Führungsschiene (6) parallel verlaufen.

2. Elektromechanischer Aktuator nach Anspruch 1, **dadurch gekennzeichnet, dass** das Steuermodul (23) die Energieübertragung an jede der mindestens drei Spulen (22) gemäß dem vorgegebenen dynamischen Regelgesetzt gewährleistet, wobei das vektorielle Regelgesetz die Energieversorgung jeder der Spulen (22) in Abhängigkeit von der Zeit bestimmt und gewährleistet:

- zu einem ersten Zeitpunkt, eine Beschleunigung des bewegbaren Elements bis zu einer maximalen Geschwindigkeit, und
- zu einem zweiten Zeitpunkt, eine Verlangsamung des bewegbaren Elements bis zu einer minimalen Geschwindigkeit, die in der Nähe der inaktiven Position im Wesentlichen 0 ist.

3. Aktuator nach Anspruch 1 oder 2, **dadurch gekennzeichnet, dass** er Dämpfervorrichtungen (9) aufweist, um das bewegbare Element (3) nahe der aktiven Position und nahe der inaktiven Position zu verlangsamen.

4. Elektromechanischer Aktuator nach Anspruch 3, **dadurch gekennzeichnet, dass** die Dämpfervorrichtungen (9) mechanische Bremsvorrichtungen aufweisen, die fest mit dem Gestell (5) verbunden sind.

5. Elektromechanischer Aktuator nach einem der vorhergehenden Ansprüche, **dadurch gekennzeichnet, dass** eine der beiden parallelen Seiten des bewegbaren Elements (3) in einem konstanten Abstand von dem Rand der Spule (22) angeordnet ist, wobei der Abstand einen konstanten Luftspalt zwischen der Primärspule und der Sekundärspule von im Wesentlichen zwischen 0,5 mm und 1,5 mm, vorzugsweise zwischen 0,5 mm und 1 mm gewährleistet.

6. Elektromechanischer Aktuator nach einem der vorhergehenden Ansprüche, **dadurch gekennzeichnet, dass** die mindestens drei Spulen (22) in Ausnehmungen (30) angeordnet sind, welche in dem Chassis (5) ausgebildet sind.

7. Aktuator nach einem der vorhergehenden Ansprüche, **dadurch gekennzeichnet, dass** das Steuermodul (23) aufweist:

- eine erste Leistungselektronikvorrichtung (26), die in der Lage ist, die Energiespeichervorrichtung (24) mit Energie zu versorgen,
- eine zweite Leistungselektronikvorrichtung (27), die in der Lage ist, die Verschiebungsvorrichtung (4) aus der Energiespeichervorrichtung zu speisen, sowie in der Lage ist, eine Grundfrequenz zwischen im Wesentlichen 50 Hz und 400 Hz zu erzeugen, und
- eine Steuerelektronikvorrichtung (28), welche die Funktionssteuerung der Leistungselektronikvorrichtungen (26, 27) gemäß dem vektoriellen dynamischen Regelgesetz gewährleistet.

8. Elektromechanischer Aktuator nach den Ansprüchen 2 und 7, **dadurch gekennzeichnet, dass** die zweite Leistungselektronik (27) in der Lage ist, die Energiespeichervorrichtung (24) bei der Verlangsamung des bewegbaren Elements (3) mit Energie zu versorgen.

9. Aktuator nach einem der vorhergehenden Ansprüche, **dadurch gekennzeichnet, dass** die Energiespeichervorrichtung (24) mindestens einen Superkondensator mit einer Leistungsdichte zwischen 10 und 20 W/kg aufweist.

**Claims**

1.  An electromechanical actuator for a circuit breaker of a high-voltage electrical facility, said actuator including:

    - a mobile equipment (3) being mobile between:

        o an active position, at which a rod (2), integral with the mobile equipment (3), enables the facility to be turned on, and
        o an inactive position, at which said rod (2) enables the facility to be turned off,

    - a displacement device (4) for displacing said mobile equipment (3), comprising a chassis (5) and ensuring shifting of the mobile equipment (3) from the active position to the inactive position, or vice versa,
    - an electric energy storage device (24),
    - a control module (23) for controlling the displacement device (4), said control module (23) ensuring energy transfer between said energy storage device (24) and said displacement device (4),
    the displacement device (4) provides linear displacement by induction of the mobile equipment (3) equipped with the rod (2) and for this purpose includes a series of at least three coils (22) inserted in a magnetic circuit positioned on the chassis (5);
    **characterised in that**
    the mobile equipment (3) is displaceably mounted to at least one rail (6) of said chassis (5) and includes a conductive material able to be displaced under the effect of a magnetic field generated by each of said at least three coils (22) when the same are supplied with electric energy by the control device (23) in accordance with a predetermined dynamic control law, said dynamic control law being a vector control law for following an acceleration profile, and **in that** said mobile equipment (3) comprises a plate (8) made of conductive material, with a substantially rectangular shape having two sides parallel to the at least one guide rail (6) attached to the chassis (5).

2.  The electromechanical actuator according to claim 1, **characterised in that** the control module (23) ensures energy transfer to each of said at least three coils (22) according to said predetermined dynamic control law, said vector control law determining energy supply to each of the coils (22) as a function of time and ensuring:

    - Firstly, accelerating of the mobile equipment to a maximum speed, and
    - Secondly, decelerating of the mobile equipment to a minimum speed substantially close to 0 in the vicinity of said inactive position.

3.  The actuator according to claim 1 or 2, **characterised in that** it comprises damping devices (9) for slowing down said mobile equipment (3) in proximity to said active position and in proximity to the inactive position.

4.  The electromechanical actuator according to claim 3, **characterised in that** the damping devices (9) include mechanical braking devices integral with the chassis (5).

5.  The electromechanical actuator according to any of the preceding claims, **characterised in that** one of the two parallel sides of the mobile equipment (3) is positioned at a constant distance from the edge of said coils (22), said distance ensuring constant air gap between inductor and armature substantially between 0.5 mm and 1.5 mm, preferably between 0.5 mm and 1 mm.

6.  The actuator according to any of the preceding claims, **characterised in that** said at least three coils (22) are positioned in notches (30) provided in said chassis (5) .

7.  The actuator according to any of the preceding claims, **characterised in that** the control module (23) includes:

    - a first power electronics device (26) able to supply energy to the energy storage device (24),
    - a second power electronics device (27) able to supply the displacement device (4) from the energy storage device, able to generate a base frequency substantially between 50 Hz and 400 Hz, and
    - a control electronics device (28) ensuring control of the operation of the power electronics devices (26, 27) in accordance with said dynamic vector control law.

8.  The electromechanical actuator according to claims 2 and 7, **characterised in that** the second power electronics device (27) is able to supply energy to the energy storage device (24) during deceleration of the mobile equipment (3) .

9. The electromechanical actuator according to any of the preceding claims, **characterised in that** the energy storage device (24) includes at least one supercapacitor having a power density of between 10 and 20 W/kg.

FIG. 1

FIG. 2

FIG. 3

FIG. 4

FIG. 5

FIG. 6

FIG. 7

FIG. 8

FIG. 9

## RÉFÉRENCES CITÉES DANS LA DESCRIPTION

**Documents brevets cités dans la description**

- EP 2835811 A1
- EP 1573766 A
- JP H0589775 B
- CN 200972840